Europäisches Patentamt

European Patent Office

Office européen des brevets

(11) Numéro de publication: **0 275 768 B1**

(12)

# FASCICULE DE BREVET EUROPEEN

(45) Date de publication de fascicule du brevet: **02.02.94**

(51) Int. Cl.5: **G02F 1/35**, G02F 1/39, G02F 1/05, G02F 1/01

(21) Numéro de dépôt: 87402916.8

(22) Date de dépôt: **18.12.87**

(54) **Dispositif d'amplification de signaux optiques à milieu photosensible.**

(30) Priorité: **23.12.86 FR 8618092**

(43) Date de publication de la demande:
**27.07.88 Bulletin 88/30**

(45) Mention de la délivrance du brevet:
**02.02.94 Bulletin 94/05**

(84) Etats contractants désignés:
**DE GB IT NL SE**

(56) Documents cités:
EP-A- 0 061 372
FR-A- 2 500 937
GB-A- 2 158 602
US-A- 3 988 593

SOVIET JOURNAL OF OUANTUM ELECTRONICS, vol. 15, no. 3, mars 1985, pages 308-325, American Institute of Physics, Woodbury, New York, US; A.P. BOGATOV et al.: "Nonlinear refraction in semiconductor lasers (review)"

(73) Titulaire: **THOMSON-CSF**
**51, Esplanade du Général de Gaulle**
**F-92800 Puteaux(FR)**

(72) Inventeur: **Huignard, Jean-Pierre**
**THOMSON-CSF**
**SCPI**
**19, avenue de Messine**
**F-75008 Paris(FR)**
Inventeur: **Hamel de Monchenault, Gautier**
**THOMSON-CSF**
**SCPI**
**19, avenue de Messine**
**F-75008 Paris(FR)**
Inventeur: **Loiseaux,Brigitte**
**THOMSON-CSF**
**SCPI**
**19, avenue de Messine**
**F-75008 Paris(FR)**
Inventeur: **Puech, Claude**
**THOMSON-CSF**
**SCPI**
**19, avenue de Messine**
**F-75008 Paris(FR)**

ZEITSCHRIFT FÜR ANGEWANDTE PHYSIK, vol. 31, no. 1, janvier 1971, pages 1-4, Berlin, DE; H. EICHLER et al.: "Lichtinduzierte, thermische Phasengitter in absorbierenden Flüssigkeiten"

J.P. Huignard, J. Optics (Paris), 1984, vol. 15, no. 5, pp. 305-313

Ph. Refregier, J. Appl. Phys. 58(1), 1 July 1985, pp. 45-57

(74) Mandataire: Guérin, Michel et al
THOMSON-CSF
SCPI
B.P. 329
50, rue Jean-Pierre Timbaud
F-92402 Courbevoie Cédex (FR)

## EP 0 275 768 B1

**Description**

L'invention concerne un dispositif d'amplification de signaux optiques à milieu photosensible permettant l'amplification d'une onde signal modulée temporellement à haute fréquence. Selon l'invention, l'amplification résulte des phénomènes de couplage d'ondes dans les cristaux photoréfractifs. Ce dispositif présente une réponse du type passe haute ce qui autorise l'amplification de signaux modulés à haute fréquence. Les applications concernent le traitement optique du signal et notamment la régénération et l'amplification de signaux issus d'une fibre optique.

Des dispositifs d'amplification d'ondes lumineuses utilisant des éléments photosensibles ont déjà été expérimentés.

On trouvera dans le brevet français déposé le 27 février 1981 sous le numéro 81.03989 et publié sous le numéro 2 500 937 la description d'un dispositif optique d'entretien d'une impulsion d'énergie radiante circulant dans un guide d'onde. Ce dispositif utilise un milieu photoréfractif dans lequel interfère le signal à entretenir et une onde de pompage. Un transfert d'énergie a lieu du faisceau de pompage vers le signal à entretenir.

Le brevet français déposé le 13 mars 1981 sous le numéro 81.05135 et publié sous le numéro 2 501 872 (correspondant à EP-A-0 061 372) décrit également un dispositif optique d'amplification en temps réel de l'énergie radiante d'un faisceau. Cet amplificateur met en oeuvre un matériau d'enregistrement photosensible dans lequel interfèrent un faisceau objet à amplifier et un faisceau de référence. Ces faisceaux créent, dans le milieu photosensible, un réseau de strates d'indices. Un transfert d'énergie a lieu entre le faisceau de référence et le faisceau objet créant un apport d'énergie au faisceau objet. Pour travailler dans des conditions optimales de transfert d'energie, cet amplificateur prévoit un déplacement des franges d'interférences soit par un déplacement mécanique du matériau d'enregistrement photosensible, soit par modulation de phase de l'un des faisceaux.

Cependant les systèmes connus ne permettent l'amplification de train d'impulsions se présentant à des fréquences élevées tels que les trains d'impulsion transmis dans la technique des télécommunications optiques. En effet, l'inertie des milieux photosensibles ne permet pas l'amplification de ces trains d'impulsions.

Le dispositif de l'invention tire profit au contraire de cette inertie pour permettre l'amplification d'impulsions se présentant à fréquence élevée.

L'invention concerne donc un dispositif d'amplification de signaux optiques à milieu photosensible comprenant :
- un milieu à variations photoinduites d'indices de réfraction ;
- une première source émettant une onde optique signal vers le milieu photosensible ;
- une deuxième source émettant une onde optique de pompe également vers le milieu photosensible ;
- l'onde optique signal et l'onde optique de pompe interférant dans le milieu photosensible, le temps de réponse dudit milieu à l'enregistrement et à l'effacement d'un réseau d'indice ayant une valeur nettement plus grande que la période moyenne de modulation de l'onde signal ;
- l'onde optique signal est modulée haute fréquence et présente une longueur d'onde déterminée ;
- l'onde optique de pompe n'est pas modulée et a une longueur d'onde sensiblement égale à celle de l'onde optique signal ;
- et le dispositif d'amplification comporte des moyens d'introduction d'un déphasage de $\pi/2$ entre le réseau d'indice et la figure d'interférence créés dans le milieu photosensible.

Les différents objets et caractéristiques de l'invention apparaîtront plus clairement à titre d'exemple en se reportant aux figures annexées qui représentent :
- la figure 1, un dispositif de couplage à deux ondes dans un cristal photoréfractif selon l'art connu ;
- la figure 2, un dispositif d'amplification d'un train d'impulsions selon l'invention ;
- les figures 3 à 6, des courbes de fonctionnement du dispositif de l'invention ;
- la figure 7, un exemple de réalisation du dispositif de l'invention ;
- la figure 8, un schéma explicatif du dispositif de l'invention.

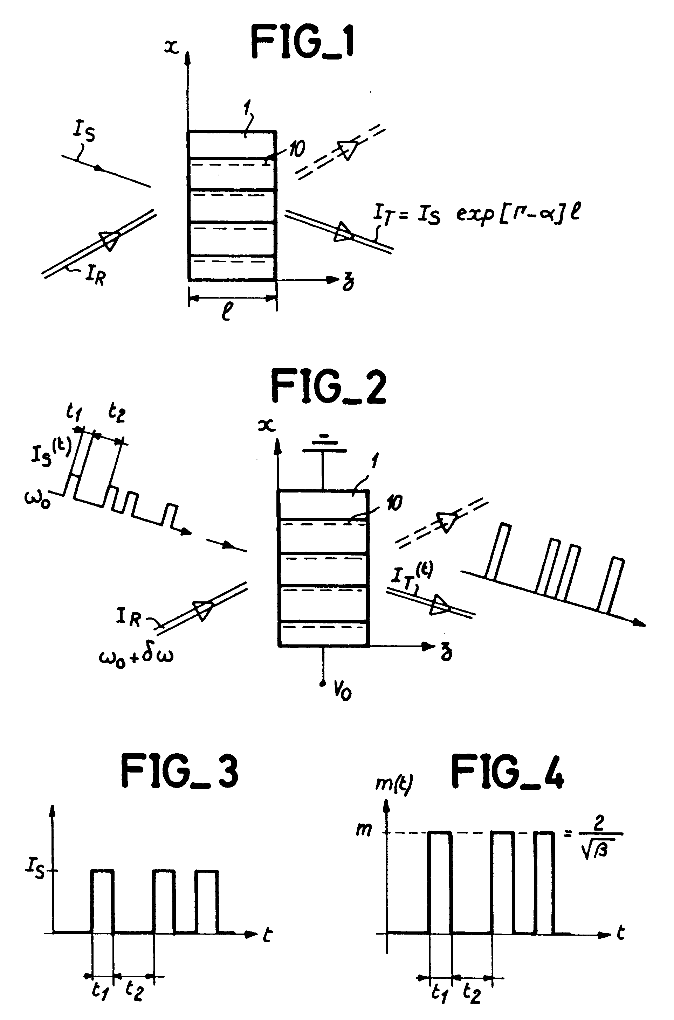

Le dispositif de l'invention repose sur les phénomènes de couplage à deux ondes mis en évidence dans les matériaux non linéaires à variation d'indice photoinduite tels que les cristaux photoréfractifs et dont le principe est rappelé sur la figure 1. Une onde pompe (ou référence) $I_R$ et une onde signal $I_S$ de faible intensité interfèrent dans le volume du cristal photoréfractif 1 (BSO, GaAs...). Les phénomènes d'autodiffraction de l'onde pompe $I_R$, par le réseau 10 photoinduit dans le volume du cristal 1, conduisent à l'amplification de l'onde $I_S$ si il existe un déphase de $\pi/2$ entre le réseau d'indice et la figure d'interférence. Dans les cristaux photoréfractifs, il est maintenant bien connu que ce décalage s'obtient par l'une ou l'autre des techniques suivantes :

3

- enregistrement à champ nul $E_O = 0$ par diffusion des photoporteurs ($BaTiO_3$, $LiNbO_3$, $KNbO_3$)
- enregistrement sous champ appliqué élevé, par exemple $E_O = 10$ kV.cm$^{-1}$, et déplacement de la figure d'interférence à vitesse constante. Ce déplacement de la figure d'interférence s'obtient par un décalage en fréquence de l'une des ondes pompe ou signal (BSO, BGO...).

Comme cela est indiqué sur la figure 1, l'intensité de l'onde transmise $I_T$ a pour valeur :

$$I_T = I_S \exp[\Gamma - \alpha]l$$

$I_S$ étant l'intensité de l'onde signal

et $\alpha$ le coefficient d'absorption du milieu photosensible à la longueur d'onde d'inscription.

Selon l'une ou l'autre de ces techniques d'enregistrement, des gains élevés de l'amplificateur photoréfractif ont été obtenus en continu pour de faibles puissances laser incidentes ($I_O < 1$ W.cm$^{-2}$). A titre d'exemple, pour des conditions d'enregistrement optimisées dans $BaTiO_3$ ou BSO, l'intensité d'un faisceau signal est amplifiée d'un facteur $10^3$ à $10^4$ après transfert d'énergie de la pompe. Ces conditions d'amplification sont obtenues pour une longueur d'interaction du cristal de l'ordre de 5 à 10 mm et pour un rapport entre les intensités des faisceaux pompe signal de l'ordre de

$$\beta = \frac{I\!R_o}{I\!S_o} = 10^3 \ .$$

Suivant les matériaux utilisés, la constante de temps d'établissement du réseau photoinduit varie de 10 ms (BSO) à 1 seconde ($BaTiO_3$) pour une densité de puissance incidente sur le cristal de 100 mW.cm$^{-2}$ à la longueur d'onde $\lambda = 514$ nm de laser Argon. Bien que le temps de réponse de l'amplificateur est relativement long, l'objet de la présente invention consiste à utiliser l'inertie du cristal pour obtenir l'amplification d'une onde signal modulée en amplitude à haute fréquence, c'est-à-dire pour une référence de modulation répondant à la condition : $f_m \gg \frac{1}{2} \pi\tau$; $\tau$ étant le temps de réponse du cristal à l'inscription et à l'effacement

Le schéma du dispositif selon l'invention est indiqué sur la figure 2. Le faisceau signal $I_S$ constitué par un train d'impulsions (durée $t_1$ ; période $t_1 + t_2$) interfère dans le cristal photoréfractif avec une onde référence. Suivant le matériau utilisé, le décalage spatial entre la figure d'interférence et la variation d'indice photoinduite s'obtient soit par enregistrement à champ nul ($E_o = 0$) par diffusion des photoporteurs, soit par enregistrement sous champ appliqué $E_o \neq 0$ et déplacement de la figure d'interférence à vitesse constante comme cela a été indiqué précédemment.

Selon l'invention, $\omega_o$ étant la fréquence moyenne du faisceau signal $I_S$, le déplacement contrôlé de la figure d'interférence s'obtient par un décalage en fréquence $\delta\omega$ de l'onde référence par rapport à l'onde signal : $\delta\omega \simeq \frac{1}{\tau}$ : $\tau$ étant le temps de réponse du cristal (BSO ; BGO ; GaAs...).

Le temps de réponse du matériau photoréfractif est contrôlé par l'intensité du faisceau pompe. Typiqument, on a les valeurs suivantes correspondant à une intensité incidente sur l'onde pompe de $I_o = 10m$ W.cm$^{-2}$. Pour illustrer l'invention on indique que le temps de réponse du cristal photoréfractif à l'enregistrement et à l'effacement peut avoir les valeurs suivantes :

$\tau \approx 1$ seconde pour $BaTiO_3$

$\tau \approx$ quelques 10 ms pour BSO, BGO,

Avec ces conditions d'enregistrement, un faisceau signal continu de très faible intensité est amplifié d'un facteur $10^2$ - $10^3$ après l'interaction avec l'onde de pompe (longueur du cristal : $\lambda \approx 5$ - 10 mm).L'objet de l'invention est donc d'obtenir des gains élevés lorsque le faisceau signal est modulé temporellement à haute fréquence. Ce nouveau type d'amplificateur à très large bande passante (réponse du type passe-haut) offre donc des perspectives nouvelles pour le traitement optique du signal et la régénération d'impulsions dans une ligne de transmission optique.

L'interférence du faisceau modulé avec l'onde référence crée dans le volume du cristal une figure d'interférence dont le taux de modulation est variable en fonction du temps. Pour le signal $I_S$ indiqué sur la figure 3, le taux de modulation représenté en figure 4 m évolue périodiquement de la valeur m(t) = m (m étant le taux de modulation correspondant au signal continu) à la valeur m(t) = 0 (effacement partiel du réseau par éclairage uniforme avec l'onde pompe);

$$m = 2 \sqrt{\frac{I_S}{I_R}}.$$

Ce qui donne m = 0,02 pour $I_R = 10^4 \times I_S$.

La répartition d'intensité lumineuse dans les franges d'interférences s'écrit dans ces conditions :

$I(x, t) = I_o [1 + m(t) \cos Kx]$

$m(t) = m \quad 0 < t < t_1$

$m(t) = 0 \quad t_1 < t < t_1 + t_2$

Compte-tenu de l'inertie du cristal, la variation d'indice $\Delta n$ induite à l'état stationnaire dans le cristal photoréfractif ne dépend que de la valeur moyenne de l'intensité lumineuse reçue par le cristal soit :

$\Delta n(x) = \Delta n_s . m(t) . \cos(Kx + \pi/2)$

$$\Delta n(x) = \Delta n_s . m \frac{t_1}{t_1 + t_2} \cos(Kx + \pi/2)$$

m = taux de modulation correspondant au signal continu ($t_2 = 0$ ; $I_S$)

$\Delta n$ : valeur maximale de la variation d'indice que l'on peut induire dans le cristal.

Puisque le cristal n'enregistre que la valeur moyenne dans le temps de la figure d'interférence, l'intensité du faisceau signal peut être modulée à fréquence élevée. Le réseau d'indice est inscrit pour toute fréquence de modulation $f_m$ telle que:

$$f_m \gg \frac{1}{2\pi\tau}$$

Le cristal se comporte donc comme un filtre passe haut dont la fréquence de coupure vaut :

$$f_c = \frac{1}{2\pi\tau}$$

soit pour $\tau = 10$ ms (cristal BSO), $f_c \sim 20$ Hz. Le réseau d'indice est donc enregistré dans le cristal pour toute modulation de l'intensité de l'onde à fréquence $f_m$ supérieure à 20 Hz. En particulier, les modulations rapides ($f_m \sim$ MHz-GHz) conviennent. Le réseau ainsi établi dans le cristal photoréfractif est amplifié par les phénomènes de couplage d'ondes (autodiffraction de l'onde pompe dans le réseau photoinduit). La variation d'indice après traversée du cristal vaut :

$\Delta n(z = l) = \Delta n(z = O) \times \exp\Gamma\frac{l}{2}$

$\Gamma$ = coefficient de gain du cristal photoréfractif. Le rendement de diffraction $\eta$ d'un tel réseau dont la profondeur de modulation varie très rapidement en fonction de z s'écrit:

$$\eta = \frac{4}{\beta}\left(\frac{t_2}{t_1 + t_2}\right)^2 \times \exp \Gamma 1$$

Le coefficient de gain $\Gamma$ est intrinsèque au cristal utilisé et sa valeur dépend des conditions d'enregistrement du réseau (pas des franges, champ appliqué...). Des valeurs du coefficient de gain $\Gamma$ comprises

entre 3 et 20 par cm ont été mesurées dans la plupart des cristaux photoréfractifs usuels.

L'amplitude de l'onde signal transmise par le cristal après interaction avec l'onde pompe peut se mettre sous la forme :

$T_1 = S + \sqrt{\eta} \times R \quad 0 < t < t_1$

$T_2 = \sqrt{\eta} \times R \quad t_1 < t < t_1 + t_2$

S étant l'amplitude de l'onde signal

R étant l'amplitude de l'onde de référence.

Le gain différentiel sur l'intensité du signal transmis vaut donc :

$$G_{diff} = \frac{(T_1)^2 - (T_2)^2}{I_S}$$

On obtient donc l'expression suivante du gain de l'amplificateur :

$$G_{diff} = \frac{4t_1}{t_1 + t_2} \exp\frac{\Gamma l}{2}$$

Compte-tenu des valeurs de $\Gamma$ mesurées dans différents cristaux un signal incident de faible intensité modulé à haute fréquence est amplifié selon les conditions suivantes :

Pour une longueur de cristal $l = 1$ cm, un rapport cyclique d'impulsion $t_2/t_1 = 1$, et un coefficient de gain du cristal photoréfractif de $\Gamma = 4$ cm$^{-1}$, on obtient un gain de l'amplificateur de $G_{diff} = 15$.

Pour un coefficient de gain de cristal photoréfractif ayant pour valeur $\Gamma = 8$ cm$^{-1}$, on obtient:

$G_{diff} = 110$

On notera que le signal est amplifié autour d'une composante dont l'intensité moyenne vaut :

$I_M \simeq I_S \exp \Gamma l$

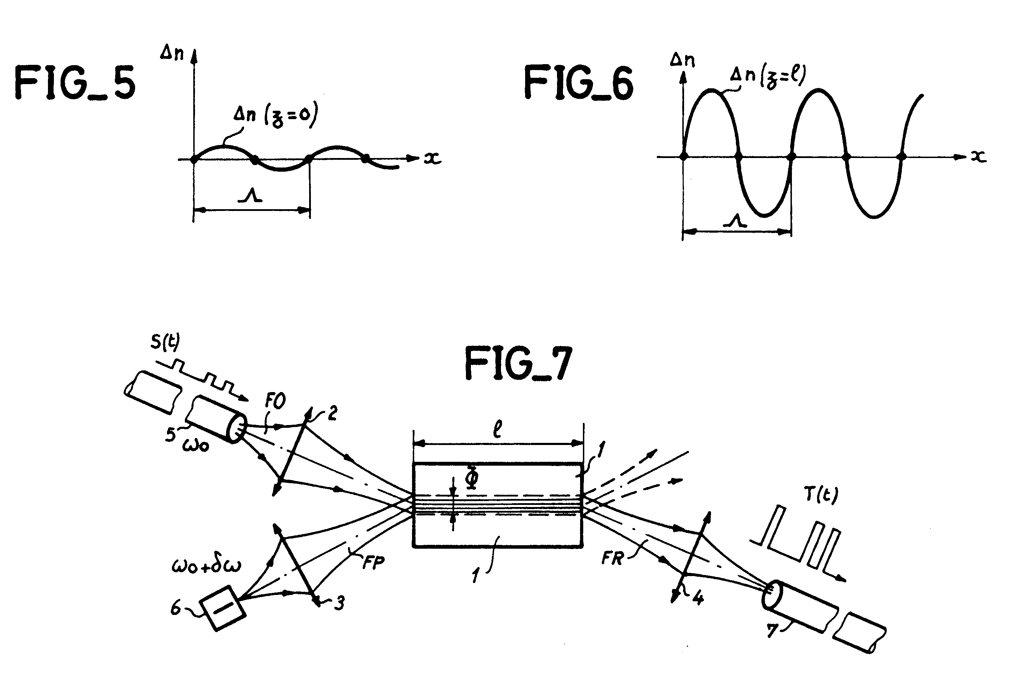

Le dispositif amplificateur de signaux pour une ligne de transmission optique faisant l'objet du présent brevet est schématisé sur la figure 7.

L'onde signal se présentant sous la forme d'un train d'impulsions, issue de la fibre 5 monomode ou multimode interfère dans le cristal 1 avec l'onde issue d'un laser semiconducteur monomode 6 jouant le rôle d'oscillateur local. La stabilité de fréquence entre les deux ondes assure l'enregistrement de l'hologramme dynamique dans le cristal photoréfractif qui est choisi en fonction de son domaine de sensibilité spectrale (par exemple GaAs, cristal photosensible aux longueurs d'ondes $\lambda = 0,85$ $\mu$m ou $\lambda = 1,3\mu$m). Les phénomènes de transfert d'énergie de l'onde pompe vers l'onde signal expliqués précédemment permettent l'amplication du train d'impulsions sans limitation de bande passante (fonction d'amplification avec courbe de réponse en fréquence du type passe haut). Le signal ainsi amplifié peut être détecté sur une photodiode (filtrage de la composante continue) ou, comme cela est représenté sur la figure, réinjecté dans une fibre optique monomode ou multimode 7.

Le faisceau lumineux émis par la fibre 5 étant divergeant, on prévoit un dispositif de focalisation 2 focalisant le faisceau dans le cristal photoréfractif 1. Un dispositif de focalisation 3 focalise également le faisceau lumineux émis par la source 6. Le cristal photoréfractif 1 et les dispositifs de focalisation 2 et 3 sont focalisés de manière que le cristal photoréfractif soit situé en un point commun de focalisation des faisceaux issuent de la fibre 5 et de la source 6.

Ainsi les phénomènes d'interférences et d'amplification pour transfert d'énergie sont maximums.

Un autre dispositif de focalisation 4 focalise le faisceau amplifié issu du cristal photoréfractif 1 et le focalise sur une face d'entrée de la fibre 7.

A titre d'exemple, un amplificateur avec un cristal photoréfractif en arséniure de gallium peut être réalisé en prévoyant un enregistrement des strates à champ nul par diffusion des photoporteurs et en utilisant pour l'oscillateur local un laser semiconducteur de longueur d'émission $\lambda = 1,3$ $\mu$m et de

puissance d'émission 1 m W.

On peut obtenir un hologramme dynamique ayant :

- un diamètre $\emptyset$ = 100 $\mu$m
- un pas de strates $\Lambda \simeq$ 1 $\mu$m
- une longueur d'interaction $\ell$ = 10 mm.

La densité de puissance appliqué au cristal photoréfractif est :

P = 10 W/cm$^2$.

On a choisi un cristal photoréfractif GaAs présentant un temps de réponse $\tau \simeq$ 1 microseconde.

La stabilité de fréquence entre les ondes pompe et signal a été maintenue inférieure à $(2\pi\tau)^{-1}$ :

Sf < $(2\pi\tau)^{-1}$

soit

Sf < 0,2 MHz

Le cristal photoréfractif (GaAs) ayant un coefficient de gain $\Gamma \simeq$ 5 cm, on obtient, pour les temps $t_1$ et $t_2$ sensiblement égaux, un gain d'amplification :

$G_{diff}$ = 2 exp $\Gamma\frac{\ell}{2}$

soit

$G_{diff}$ = 25

- L'amplificateur est compatible avec l'utilisation d'un faisceau signal issue d'une fibre multimode puisque chaque composante de l'onde plane issue de la fibre interfère de la façon cohérente avec l'onde pompe.
- La détection est du type homodyne, c'est-à-dire que le signal détecté résulte de la superposition cohérente des deux ondes suivantes :
- onde signal = S
- onde autodiffractée = $\sqrt{}$ ?P

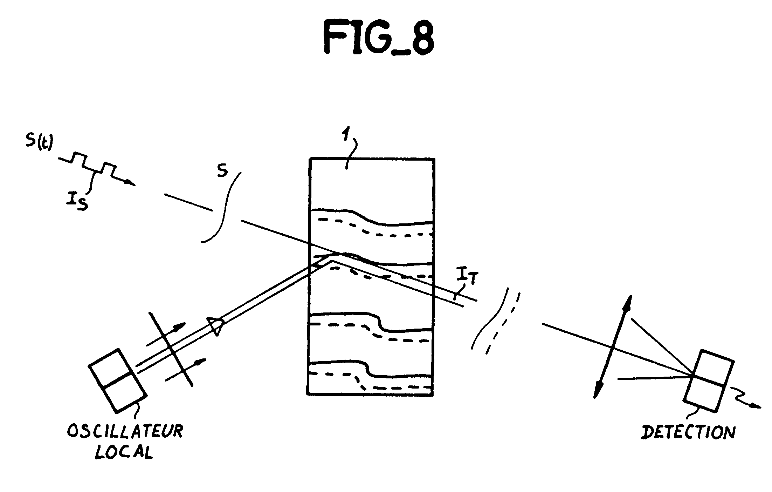

L'onde autodiffractée joue le rôle d'onde oscillateur local dont la phase est rigoureusement adaptée en tout point à celle de l'onde signal incidente (figure 8).

Dans l'exemple de réalisation qui précède on a considéré que le milieu photosensible était un cristal photoréfractif. Cependant, l'invention est également applicable de manière générale à un dispositif dont le milieu photosensible est fait d'un matériau à variation d'indice à constante de temps d'établissement du phénomène tel que par exemple des matériaux à variation d'indice thermique ou a génération de porteurs dans le semiconducteurs.

Par ailleurs, il est bien évident que les exemples numériques n'ont été fournis que pour illustrer la description et que d'autres variantes peuvent être envisagées sans sortir du cadre de l'invention.

**Revendications**

1.  Dispositif d'amplification de signaux optiques à milieu photosensible comprenant :
    - un milieu à variations photoinduites d'indices de réfraction (1) ;
    - une première source (6) émettant une onde optique signal présentant une longueur d'onde déterminée vers le milieu photosensible ;
    - une deuxième source émettant une onde optique de pompe également vers le milieu photosensible ;
    - l'onde optique signal et l'onde optique de pompe interférant dans le milieu photosensible;
      des moyens d'introduction d'un déphasage de $\pi/2$ entre le réseau d'indice et la figure d'interférence créés dans le milieu photosensible,
      caractérisé en ce que :
    - la première et la seconde source sont telles que l'onde optique signal est modulée haute fréquence l'onde optique de pompe n'est pas modulée et a une longueur d'onde très peu différente de celle de l'onde optique signal ;

- et en ce que le temps de réponse dudit milieu à l'enregistrement et à l'effacement d'un réseau d'indice a une valeur nettement plus grande que la période moyenne de modulation de l'onde signal.

2. Dispositif d'amplification de signaux optiques à milieu photosensible selon la revendication 1, caractérisé en ce qu'il comporte un premier dispositif de focalisation (2) focalisant l'onde signal sensiblement au centre du milieu photosensible, un deuxième dispositif de focalisation (3) focalisant également l'onde pompe sensiblement au centre du milieu photosensible, celui-ci étant au point commun de focalisation des deux ondes signal et pompe.

3. Dispositif d'amplification selon la revendication 1, caractérisé en ce que le milieu à variations photoinduites d'indices de réfraction (1) est un cristal photoréfractif.

4. Dispositif d'amplification selon la revendication 1, caractérisé en ce que le milieu à variations photoinduites d'indices de réfraction est un milieu à variation thermique d'indice.

5. Dispositif d'amplification selon la revendication 1, caractérisé en ce que le milieu à variations photoinduites d'indices de réfraction est un milieu à génération de porteurs de charges dans un semiconducteur.

6. Dispositif d'amplification selon la revendication 1, caractérisé en ce que : l'onde optique signal se présente sous la forme d un train d' impulsions issue d'une fibre (5) monomode ou multimode et l'onde optique de pompe est issue d'un laser semiconducteur monomode (6) jouant le rôle d'oscillateur.

**Claims**

1. Device for amplification of optical signals with a photosensitive medium comprising:
   - a medium with photo-induced variations of refractive indices (1);
   - a first source (6) emitting an optical signal wave exhibiting a defined wavelength towards the photosensitive medium;
   - a second source emitting an optical pump wave also towards the photosensitive medium;
   - the optical signal wave and the optical pump wave interfering in the photosensitive medium;
   - means of introducing a phase shift of $\pi/2$ between the index grid and the interference figure which are created in the photosensitive medium,

   characterized in that:
   - the first and the second source are such that the optical signal wave is high-frequency modulated, the optical pump wave is not modulated and has a wavelength which is very little different from that of the optical signal wave;
   - and in that the response time of the said medium to the recording and to the erasing of an index grid has a value which is considerably greater than the mean modulation period of the signal wave.

2. Device for amplifying optical signals with a photosensitive medium according to Claim 1, characterized in that it includes a first focusing device (2) focusing the signal wave substantially at the centre of the photosensitive medium, a second focusing device (3) also focusing the pump wave substantially at the centre of the photosensitive medium, the latter being at the common focusing point of the two signal and pump waves.

3. Amplification device according to Claim 1, characterized in that the medium with photo-induced variations of refractive indices (1) is a photo refractive crystal.

4. Amplification device according to Claim 1, characterized in that the medium with photo-induced variations of refractive indices is a medium with thermal index variation.

5. Amplification device according to Claim 1, characterized in that the medium with photo-induced variations of refractive indices is a medium with generation of charge carriers in a semiconductor.

**6.** Amplification device according to Claim 1, characterized in that: the optical signal wave exhibits the shape of a train of pulses coming from a monomode or multimode fibre (5) and the optical pump wave comes from a monomode semiconductor laser (6) acting as an oscillator.

**Patentansprüche**

**1.** Vorrichtung zum Verstärken von optischen Signalen mit lichtempfindlichem Medium, enthaltend:
- ein Medium (1) mit durch Licht hervorgerufenen Brechungsindexänderungen;
- eine erste Quelle (6), die eine optische Signalwelle mit einer bestimmten Wellenlänge gegen das lichtempfindliche Medium abstrahlt;
- eine zweite Quelle, die eine optische Pumpwelle ebenfalls gegen das lichtempfindliche Medium abstrahlt;
- wobei die optische Signalwelle und die optische Pumpwelle in dem lichtempfindlichen Medium miteinander interferieren;
- Mittel zum Herbeiführen einer Phasenverschiebung von $\pi/2$ zwischen dem Indexgitter und dem in dem lichtempfindlichen Medium erzeugten Interferenzbild,
dadurch gekennzeichnet, daß die erste und die zweite Quelle der Art sind, daß
- die optische Signalwelle HF-moduliert ist, die optische Pumpwelle nicht moduliert ist und eine Wellenlänge hat, die von der der optischen Signalwelle sehr verschieden ist;
- und daß die Ansprechzeit des Mediums beim Speichern und beim Löschen eines Indexgitters einen Wert hat, der deutlich größer als die mittlere Modulationsperiode der Signalwelle ist.

**2.** Vorrichtung zum Verstärken von optischen Signalen mit lichtempfindlichem Medium nach Anspruch 1, dadurch gekennzeichnet, daß sie eine erste, die Signalwelle im wesentlichen in der Mitte des lichtempfindlichen Mediums fokussierende Fokussiervorrichtung (2) und eine zweite, auf die Pumpwelle im wesentlichen in der Mitte des lichtempfindlichen Mediums fokussierende Fokussiervorrichtung (3) enthält, wobei dieses am gemeinsamen Brennpunkt der Signalwelle und der Pumpwelle liegt.

**3.** Verstärkungsvorrichtung nach Anspruch 1, dadurch gekennzeichnet, daß das Medium (1) mit durch Licht hervorgerufenen Brechungsindexänderungen ein lichtbrechender Kristall ist.

**4.** Verstärkungsvorrichtung nach Anspruch 1, dadurch gekennzeichnet, daß das Medium mit durch Licht hervorgerufenen Brechungsindexänderungen ein Medium mit thermischer Brechungsindexänderung ist.

**5.** Verstärkungsvorrichtung nach Anspruch 1, dadurch gekennzeichnet, daß das Medium mit durch Licht hervorgerufenen Brechungsindexänderungen ein Medium mit Ladungsträgererzeugung in einem Halbleiter ist.

**6.** Verstärkungsvorrichtung nach Anspruch 1, dadurch gekennzeichnet, daß die optische Signalwelle die Form einer aus einer Monomoden- oder Multimoden-Faser (5) austretenden Impulsfolge hat und daß die optische Pumpwelle von einem Monomoden-Halbleiterlaser (6) abgegeben wird, der die Rolle des Oszillators spielt.

FIG_1

FIG_2

FIG_3

FIG_4

FIG_5

$\Delta n$

$\Delta n\ (\mathfrak{z}=0)$

$x$

$\Lambda$

FIG_6

$\Delta n$

$\Delta n\ (\mathfrak{z}=\ell)$

$x$

$\Lambda$

FIG_7

$S(t)$

FO

2

5 $\omega_0$

$\ell$

$\phi$

1

$\omega_0+\delta\omega$

FP

6

3

1

FR

4

$T(t)$

7

EP 0 275 768 B1

# FIG_8

S(t)

$I_S$

S

$I_T$

1

OSCILLATEUR LOCAL

DETECTION